# FASCICULE DE BREVET EUROPEEN

(11) **EP 0 752 958 B1**
(45) Date de publication et mention de la délivrance du brevet: **03.06.1998**
(21) Numéro de dépôt: 95915232.3
(22) Date de dépôt: 30.03.1995
(51) Int. Cl.: B65D 51/16

(54) **DISPOSITIF DE VALVE DE SECURITE POUR EMBALLAGES DE PRODUITS A CUIRE, REFROIDIR, REMETTRE EN TEMPERATURE OU A DEGAZER**
SICHERHEITSVENTIL ZUM WÄRMEN BZW. NACHWÄRMEN, KÜHLEN BZW. WIEDERKÜHLEN ODER ENTLÜFTEN VON PRODUKTE BEINHALTENDEN VERPACKUNGEN
SAFETY VALVE DEVICE FOR PACKAGINGS CONTAINING PRODUCTS TO BE COOKED, COOLED, REHEATED OR DEGASSED

(30) Priorité: 31.03.1994 FR 9403945
(43) Date de publication de la demande: 15.01.1997
(73) Titulaire: Grandi, René, I-22060 Campione d'Italia (IT)
(72) Inventeur: Grandi, René, I-22060 Campione d'Italia (IT)
(74) Mandataire: Roman, Michel
(86) Numéro de dépôt international: FR9500408
(87) Numéro de publication internationale: WO9526912

(56) Documents cités:
- DE-C- 662 560
- US-A- 2 027 137

## Description

Il est destiné à évacuer les buées, les vapeurs ou les gaz et faire office d'ouverture au moment de la cuisson, remise en température ou stockage d'aliments dans leur emballage sur lequel il est appliqué et faire office de fermeture, lors du refroidissement des aliments, ceci toujours dans leur emballage. Ce dispositif est nécessaire car la cuisson d'aliments dans un contenant étanche - comme il est connu en utilisation par micro-ondes - provoque souvent l'éclatement de celui-ci.

Le refroidissement des produits chauds dans certaines conditions d'emballage, provoque un vide partiel et toute mauvaise fermeture ne peut maintenir les produits en état de stérilisation ou d'apertisation. Il est notamment préconisé pour les aliments devant être réchauffés au micro-ondes où actuellement il est préconisé de percer l'emballage pour éviter un éclatement certain de tout le contenant.

Il est connu des dispositifs formant des valves ou soupapes de sécurité appliquée sur des emballages en carton, plastiques, aluminium ou autres contenants alimentaires. Ces dispositifs bien que permettant l'évacuation des vapeurs en cours de chauffe, cuisson ou remise en température, ne permettent pas au moment du refroidissement d'obstruer l'orifice d'évacuation et de fermer hermétiquement l'emballage afin d'éviter toute pénétration d'air et donc de bactéries dans les produits qui ne sont donc plus stériles, ceci entraînant leur dégradation.

Par ailleurs, certains dispositifs connus, notamment des systèmes "fusible avec cire" qui obstrue l'orifice d'évacuation et fond à la chaleur et laisse passer les vapeurs. Mais la cire ayant disparue elle ne peut plus être efficace au refroidissement.

Le brevet américain N° US-A-2 027 137 (L. I. YEOMANS) décrit un emballage en étain pour produits alimentaires comportant une valve destinée à contrôler le passage de l'air ou du gaz. Cette valve, constituée d'une languette pourvue d'un disque d'étanchéité, est logée dans une dépression de la paroi de l'emballage et est agencée pour obturer, en l'absence de pression interne, un orifice situé au centre de la dépression, et pour se relever en dégageant ledit orifice lors de la mise sous vide du contenu ou en cas d'excès de gaz accumulé dans l'emballage après un temps de stockage important.

Tous ces systèmes ne sont pas fonctionnels au maximum de la demande et souvent le manque d'étanchéité ne permet pas de transporter les produits efficacement sans risque de débordement, les emballages devant être de nouveau cachetés manuellement.

Les critères nécessaires à la préservation stérile des produits dans les systèmes connus, étant difficilement contrôlables, c'est pourquoi le dispositif objet de la présente invention tel que défini principelement dans la revendication 1, tout en évitant les inconvénients décrits, permet, par une certaine souplesse d'élévation, une bonne évacuation des vapeurs, tout en gardant une certaine rigidité pour la pression constante de fermeture dynamique pour la réfrigération et le stockage en conserve ou semi-conserve des produits.

Ce produit peut également être réutilisé pour chauffer et refroidir à volonté les produits contenus sans aucune intervention manuelle au dispositif même. Ainsi un aliment peut, toujours dans la même barquette, être maintenu en froid, puis être cuit, ensuite congelé, puis remis en température au moment de la consommation.

Ce dispositif qui sera dénommé ci-dessous valve, peut être adapté aux contenants de tous produits alimentaires ou boissons comme les jus de fruits ou emballages pour les sandwichs chauds, croque-monsieur, pizzas et...., et également pour dégazer des produits tel que le café. Il sera même conseillé pour toute utilisation de barquettes à cuire ou réchauffer au microondes.

Les emballages peuvent être préalablement structurés ou non d'une cavité pour recevoir la valve. Les produits pourront être véhiculés sans risques de transbordement ni d'attaque bactérielle. On pourra l'utiliser aussi bien sur des emballages rigides ou à couvercles rigides que directement sur une barquette scellée par un film où il sera alors appliqué sur ou sous le rebord de la barquette ou du contenant. Il peut également être recouvert d'un film adhésif.

Cette valve peut également être thermo-formée ou injectée sur le même moule de fabrication que la barquette ou le couvercle même de l'emballage.

Elle est fabriquée en matière plastique résistant à de hautes températures et dans certains cas d'emballages, elle peut être réalisée en acier ou tout autre matière remplissant les mêmes conditions.

Sa présentation est effectuée d'une seule pièce dont la partie périphérique sera fixée ou collée sur le support d'emballage, une découpe intérieure vient dégager une soupape mobile mais à la fois rigide et dont la base est maintenue à la partie périphérique et qui est déterminée par des découpes de "déformation" dont la forme est calculée de façon à garder une certaine rigidité et obtenir une mise en "mémoire active" de rétraction, sensibilisant cette base, au moment de la réfrigération des produits ou d'absence de poussée des vapeurs à gaz, formant une zone d'articulation pour assurer un rappel de ressort efficace tout en gardant sa rigidité et satisfaire la fonction demandée d'ouverture et de fermeture dynamique. Sous la soupape, une pastille fait office de clapet de fermeture dans la cavité du support-emballage au moment du refroidissement, cette pastille comporte également un ou des "picots" qui sont coniques pour se loger et s'extraire plus facilement dans le ou les orifices d'évacuation de la cavité d'évacuation des vapeurs.

Le dispositif objet de cette invention sera bien compris à l'aide de la description qui suit, en référence aux dessins ci-annexés, représentant à titre d'exemples non limitatifs, une forme d'exécution de ce dispositif.

La figure 1 représente un schéma du dispositif vu de dessus désignant les parties spécifiques qui le caractérisent.

Les figures 2 et 3 sont une représentation en perspective de la valve, l'une ouverte et l'autre fermée.

La figure 4 montre une coupe détaillée de la valve sur son support d'emballage, en A elle est ouverte, en B elle clôt l'emballage.

La figure 5 montre un exemple d'adaptation de la valve sur le couvercle même d'une barquette.

Les figures 6 et 7 montrent un autre exemple de réalisation d'une valve adaptée sur le rebord d'une barquette.

La figure 8 est la vue détaillée et en coupe du dispositif des figures 6 et 7. En A la soupape est fermée et en B ouverte.

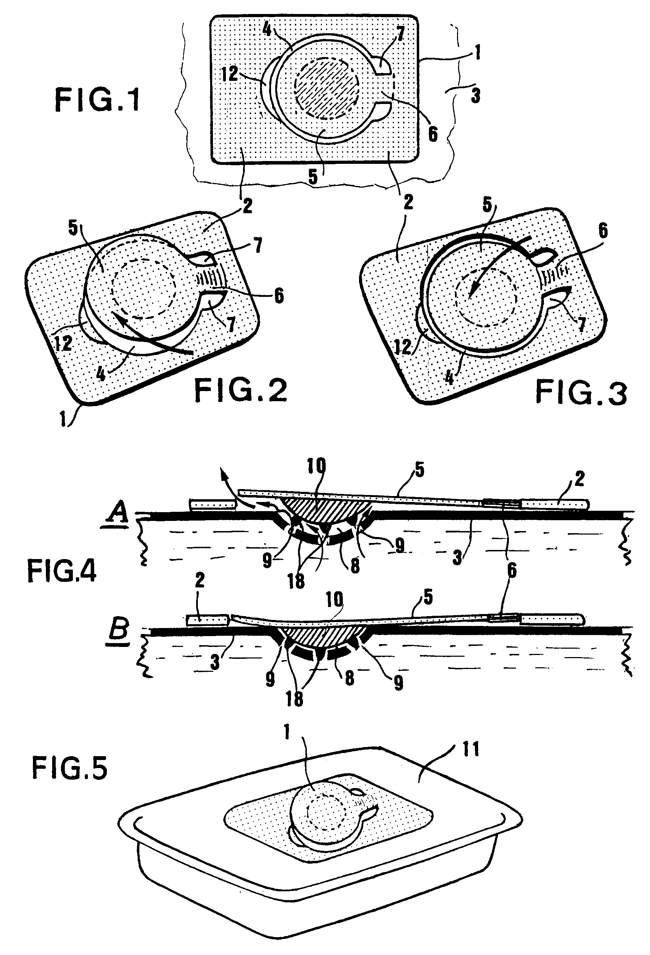

En se référant aux fig 1, 2, 3 et 4, la valve 1 se compose d'une partie périphérique fixe 2 collée sur le support-emballage 3. La découpe 4 dégage la soupape 5 dont la base 6, déterminée par les découpes 7, a la rigidité adéquate pour obtenir une efficacité optimum du rappel de ressort caractérisé par la "mémoire active" sensibilisant cette base 6, et formant l'articulation pour lever ou baisser la soupape 5. Une encoche 12 permet d'introduire un doigt en cas de besoin d'une ouverture manuelle de la valve.

Sur la figure 4, les schémas A et B montrent la coupe de la valve 1 dont la partie périphérique 2 est fixée sur le support-emballage 3. La cavité 8 comporte les orifices 9 de soupape de sécurité pour les vapeurs. En A, pendant la chauffe, les émissions de vapeurs chaudes dégagent la pastille 10 de la cavité 8 et font s'élever la soupape 5 activant sa base 6 et laissant échapper les vapeurs. En B, en cours de refroidissement, la valve 1 fait office de fermeture, la mémoire de base 6 la fait se rétracter, en positionnant la pastille 10 dans la cavité 8 du support-emballage.

Selon une variante, la valve 1 est fixée sur la barquette 11 de cuisson.

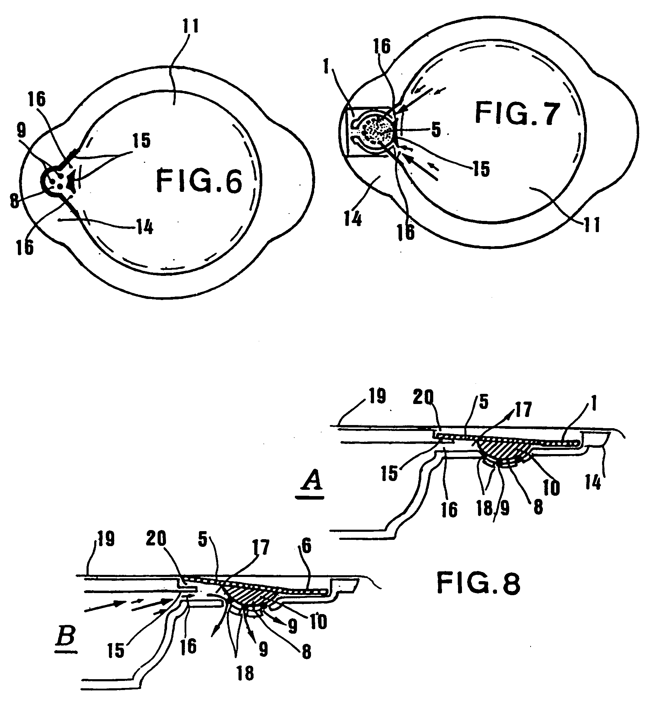

La figure 6 montre une barquette 11 destinée à recevoir sur son rebord 14 la valve qui sera fixée sur les parties 15 laissant libres les encoches ou couloirs 16 afin que les excès de vapeur se dirigent sur les orifices 9 de la cavité 8.

Sur la figure 7, la valve 1 et sa soupape 5 sont positionnées sur les parties 15 du rebord 14 de la barquette et par-dessus les couloirs 16.

Sur les figures 8, on remarquera que la valve 1 est bien encastrée dans le rebord 14 de la barquette où il est important de noter que la soupape 5 devra s'appuyer sur la partie 15 de la barquette 11 afin de laisser libre les couloirs 16 pour qu'un point 17 de poussée des vapeurs puisse s'effectuer. La valve peut être thermo-formée et être solidaire en même temps dans le moule de fabrication de l'ensemble de la barquette.

Elle est recouverte d'un film 19 formant une pression, il sera également nécessaire de laisser un espace 20 suffisant entre l'appui 15 et le film 19 afin que la soupape 5 puisse se lever sous la poussée des vapeurs. En A, la soupape 5 est fermée, la pastille 10 et les picots 18 sont positionnés dans la cavité 8 et les orifices 9 formant le point 17 de poussées des vapeurs qui permettra de soulever la soupape 5. En B, la soupape 5 agissant sur sa base 6 est dégagée ainsi que la pastille 10 et les picots 18, permettant l'évacuation des vapeurs par les orifices 9.

## Revendications

1. Dispositif de valve de sécurité pour emballages de produits à cuire, refroidir, remettre en température ou dégazer, comportant des découpes de déformation (4 et 7) dégageant une soupape (5) qui se relève par la pression des vapeurs ou des gaz et se rabat au refroidissement ou en absence de poussée, refermant l'ensemble du contenant ou barquette (11) par une pastille (10),
caractérisé en ce que ladite pastille est munie de picots (18) coniques se logeant dans des orifices (9) percés dans une cavité (8) du support-emballage (3).

2. Dispositif selon la revendication 1, caractérisé en ce que la zone d'articulation de la base (6) de la soupape (5) permettant sa levée et sa rétraction, est sensibilisée par une "mémoire active" inscrite dans cette base et par la forme donnée aux découpes de déformation (7).

3. Dispositif selon les revendications 1 et 2, caractérisé en ce que les vapeurs de la cuisson des aliments contenus dans la barquette (11) produisent une poussée sur les picots (18) et la pastille (10) levant la soupape (5) et dégageant la cavité (8) ainsi que les orifices (9) pour évacuer les vapeurs ou gaz vers l'extérieur.

4. Dispositif selon les revendications 1 et 2, caractérisé en ce que, par le refroidissement de la barquette (11) ou l'absence de poussée des vapeurs, la réaction de la "mémoire active" inscrite dans la base (6) rétracte la soupape (5) en positionnant la pastille (10) dans la cavité (8) du support-emballage (3) ou du rebord (14) et les picots (18) dans le ou les orifices (9) d'évacuation des vapeurs assurant une fermeture hermétique de la valve (1)

5. Dispositif selon l'une des revendications précédentes, caractérisé en ce que la valve (1) est positionnée sur le rebord pré-formé (14) d'une barquette (11) et des couloirs (16) d'accès au rebord dirigent les vapeurs vers la valve, et permettent la formation d'un point de poussée (17) des vapeurs en faisant lever la soupape (5) qui est reliée à la partie centrale de la barquette par un appui (15).

6. Dispositif selon la revendication 5, caractérisé en ce que la levée de la soupape (5) dégage les picots (18) des orifices (9) permettant l'évacuation des vapeurs par ces orifices, sous les rebords (14) de la barquette (11)

7. Dispositif selon les revendications 5 et 6, caractérisé en ce que la valve (1) thermo-formée ou non dans l'ensemble de la barquette, est encastrée dans le rebord (14) recouvert d'un film (19), un espace (20) est constitué entre l'appui (15) et le film (19) pour permettre la levée de la soupape (5) sous la poussée des vapeurs

## Claims

1. Relief valve system for the wrappings of products to be cooked, cooled, reheated or degassed, comprising deformation cut-outs (4 and 7) which release a flap (5) which is raised by the pressure of the steam or the gas and falls on cooling or in the absence of pressure, enclosing all the contents or product trough (11) by a capsule (10),
characterized in that the said capsule is equipped with conical points (18) which fit into openings (9) pierced in a cavity (8) of the packing support (3).

2. System as per claim 1 characterized in that the zone of articulation of the base (6) of the flap (5) allowing it to be raised and retracted, is sensitized by an "active memory" inscribed in this base and by the shape given to the deformation cut-out (7).

3. System as per claims 1 and 2 characterized in that the cooking steam of the foodstuffs contained in the product trough (11) generates pressure on the points (18) and the capsule (10) raising the flap (5) and releasing the cavity (8) together with the openings (9) in order to evacuate the steam or gases to the outside.

4. System as per claims 1 and 2 characterized in that, by cooling the product trough (11) or in the absence of steam pressure, the reaction of the "active memory" inscribed in the base (6) is to retract the flap (5) by positioning the capsule (10) in the cavity (8) of the support-wrapping (3) or the edge (14) and the points (18) in the opening(s) (9) for evacuating the steam to ensure hermetic closure of the valve (1).

5. System as per one of the previous claim characterized in that the valve (1) is positioned on the preformed edge (14) of a product trough (11) and access channels (16) to the edge direct the steam towards the flap and allow the formation of a point of steam pressure (17) by causing the flap (5), which is linked to the central part of the product trough by a bearer (15), to rise.

6. System according to claim 5 characterized in that raising the flap (5) releases the points (18) from the openings (9) allowing the evacuation of steam through these openings, below the edges (14) of the product trough (11).

7. System as per claims 5 and 6 characterized in that the valve (1), which is thermoformed or otherwise in the product trough assembly, is embedded in the edge (14) covered by a film (19), a space (20) is created between the bearer (15) and the film (19) to allow the flap (5) to rise under the pressure of the steam.

## Patentansprüche

1. Vorrichtung mit Sicherheitsventil zur Verpackung von zu garenden, zu kühlenden, aufzuwärmenden oder zu entgasenden Produkten, mit Verformungsausschnitten (4 und 7), welche eine Klappe (5) freisetzen, die sich unter dem Druck der Dämpfe oder der Gase anhebt und bei Erkalten oder Abwesenheit von Druck anzieht und die Gesamtheit des Behältnisses oder der Schale (11) durch eine Pastille (10) einschließt, dadurch gekennzeichnet, daß die besagte Pastille mit konischen Zapfen (18) versehen ist, die in einer Vertiefung (8) der Träger-Verpackung (3) angebrachte Öffnungen (9) eingreifen.

2. Vorrichtung gemäß Anspruch 1, dadurch gekennzeichnet, daß der Gelenkbereich der Basis (6) der Klappe (5), welche das Anheben und Anziehen ermöglicht, durch ein in dieser Basis eingeschriebenes "aktives Gedächtnis" und durch die den Verformungsausschnitten (7) gegebene Form sensibilisiert wird.

3. Vorrichtung gemäß den Ansprüchen 1 und 2, dadurch gekennzeichnet, daß die Garungsdämpfe der in der Schale (11) befindlichen Nahrungsmittel einen Druck auf die Zapfen (18) und die Pastille (10) ausüben und dadurch die Klappe (5) anheben und die Vertiefung (8) sowie die Öffnungen (9) freigeben, um die Dämpfe bzw. Gase nach Außen abzulassen.

4. Vorrichtung gemäß den Ansprüchen 1 und 2, dadurch gekennzeichnet, daß durch die Kühlung der Schale (11) oder die Abwesenheit von Dampfdruck die Reaktion des in der Basis (6) eingeschriebenen "aktiven Gedächtnisses" die Klappe (5) anzieht und damit die Pastille (10) in der Vertiefung (8) der Träger-Verpackung (3) oder des Randes (14) und die Zapfen (18) in der bzw. den Dampfauslaß-Öffnung(en) (9) positioniert und einen hermetischen Verschluß des Ventils (1) gewährleistet.

5. Vorrichtung gemäß einem der vorhergehenden Ansprüchen, dadurch gekennzeichnet, daß das Ventil (1) auf dem vorgeformten Rand (14) einer Schale (11) positioniert ist und Zugangskanäle (16) zum Rand die Dämpfe zu dem Ventil leiten und die Bildung eines Schubpunktes (17) der Dämpfe ermöglichen und dadurch die Klappe (5) anheben, die mit dem zentralen Teil der Schale durch eine Unterstützung (15) verbunden ist.

6. Vorrichtung gemäß Anspruch 5, dadurch gekennzeichnet, daß das Anheben der Klappe (5) die Zapfen (18) aus den Öffnungen (9) befreit, und den Auslaß der Dämpfe durch diese Öffnungen unter den Rändern (14) der Schale (11) erlaubt.

7. Vorrichtung gemäß den Ansprüchen 5 und 6, dadurch gekennzeichnet, daß das in der Gesamtheit der Schale thermogeformte oder nicht thermogeformte Ventil (1) in den Rand (14) eingelassen ist und von einer Folie (19) bedeckt wird, wobei ein Hohlraum (20) zwischen der Unterstützung (15) und der Folie (19) gebildet wird, um das Anheben der Klappe (5) unter dem Dampfdruck zu ermöglichen.
